# EUROPÄISCHE PATENTANMELDUNG

(11) **EP 3 188 452 A1**
(43) Veröffentlichungstag der Anmeldung: **05.07.2017**
(21) Anmeldenummer: 15203145.6
(22) Anmeldetag: 30.12.2015
(51) Int. Cl.: H04L 29/12, H04L 29/08

(54) **VERFAHREN ZUR ÜBERMITTLUNG VON DATENRAHMEN INNERHALB EINES KOMMUNIKATIONSNETZES EINES INDUSTRIELLEN AUTOMATISIERUNGSSYSTEMS UND KOMMUNIKATIONSGERÄT**

(71) Anmelder: Siemens Aktiengesellschaft, 80333 München (DE)
(72) Erfinder: Kießling, Marcel, 90419 Nürnberg (DE)

(57) **Zusammenfassung**

Zur Übermittlung von Datenrahmen innerhalb eines Kommunikationsnetzes eines industriellen Automatisierungssystems wird Sicherungsschicht-Verbindungen, über die auf Sicherungsschicht Datenrahmen übermittelt werden, jeweils eine logische Geräteadresse zugeordnet, anhand derer die Sicherungsschicht-Verbindungen identifizierbar sind. Sicherungsschicht-Verbindungen wird jeweils zusätzlich ein Verbindungsname zugeordnet. Jeweils aktualisierte Zuordnungen zwischen logischen Geräteadressen und Verbindungsnamen werden in einem Namensdienst-System registriert und durch dieses für Namensauflösungen bzw. inverse Namensauflösungen bereitgestellt werden. Sicherungsschicht-Verbindungen zugeordnete Kommunikationsnetz-Ressourcen sind unter Angabe des jeweiligen Verbindungsnamens verwendbar, wobei der Verbindungsname in eine logische Geräteadresse aufgelöst wird.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus EP 2 940 926 A1 ist ein Verfahren zur Konfiguration eines Kommunikationsgeräts innerhalb eines industriellen Automatisierungssystems bekannt, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

In der älteren europäischen Patentanmeldung mit der Anmeldenummer 15153033.4 ist ein Verfahren zum Aufbau einer unterbrechungsfreien Kommunikationsverbindung mit einem Kommunikationsgerät beschrieben, das einem industriellen Automatisierungssystem zugeordnet ist. Eine dem Kommunikationsgerät zugeordnete Überwachungseinheit überprüft auf Basis eines Namensauflösungsprotokolls, ob eine zweite dem ersten Kommunikationsgerät zugeordnete Kommunikationsnetzadresse gültig wird. Bei Zuordnung einer neuen gültigen Kommunikationsnetzadresse und bestehender Kommunikationsverbindung initiiert die Überwachungseinheit einen Aufbau einer zusätzlichen Kommunikationsverbindung unter Verwendung der neuen Kommunikationsnetzadresse.

US 2007/0036161 A1 betrifft ein auf Ethernet Frame Routing (EFR) basierendes Verfahren zum Routing von Ethernet-Datenrahmen innerhalb eines Layer-2-Kommunikationsnetzes unter Verwendung von MAC-Adressen. Hierzu werden zunächst Nachbarschaftsbeziehungen zwischen Ethernet-Switches mittels Ethernet Shortest Path First (ESPF) und Hello Protocol Data Units (Hello PDUs) eingerichtet. ESPF-Nachbar-Switches tauschen Nachrichten mit Link Layer State Advertisements (LLSA) aus, die Zustandsinformationen ihrer Ethernet-Verbindungen und Erreichbarkeitsinformationen zu Ziel-MAC-Adressen umfassen. LLSA-Nachrichten werden durch ESPF-Switches in das Layer-2-Kommunikationsnetz geflutet. Auf jedem EFR-Switch läuft ein modifizierter Shortest Path First Algorithmus ab, um Listen redundanter kürzester Pfade zu jeweils einer Ziel-MAC-Adresse in priorisierter Reihenfolge zu erstellen. Unter Verwendung dieser Listen wird eine Ethernet Frame Forwarding Datenbasis zum Routing von Ethernet-Datenrahmen erstellt.

Aus Leistungsgründen erfolgt eine Echtzeit-Datenübermittlung bisher direkt auf Layer 2 bzw. Sicherungsschicht. Für eine optimierte Datenübermittlung oder eine vereinfachte Pfadeinrichtung können dabei insbesondere Layer 2 Multicast Adressen verwendet werden. Als problematisch erweisen sich jedoch Adressen, die jeweils von mehreren Teilnehmern für eine zuverlässige Identifikation einer genutzten Verbindung benötigt werden, insbesondere wenn es zu Adressänderungen kommt.

Der vorliegenden Erfindung liegt die Aufgabe zugrunde, ein Verfahren zur Übermittlung von Datenrahmen innerhalb eines Kommunikationsnetzes eines industriellen Automatisierungssystems zu schaffen, das eine einfach zu handhabende und zuverlässige Identifizierung von Verbindungen für eine Echtzeit-Datenübermittlung ermöglicht, sowie ein geeignetes Kommunikationsgerät anzugeben.

Diese Aufgabe wird erfindungsgemäß durch ein Verfahren mit den in Anspruch 1 angegebenen Merkmalen und durch ein Kommunikationsgerät mit den in Anspruch 10 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren, bei dem zu übermittelnde Datenrahmen zumindest eine Quell-Geräteadresse und eine Ziel-Geräteadresse umfassen, wird Sicherungsschicht-Verbindungen, über die auf Sicherungsschicht Datenrahmen übermittelt werden, jeweils eine logische Geräteadresse zugeordnet, anhand derer die Sicherungsschicht-Verbindungen identifizierbar sind. Die logischen Geräteadressen sind beispielsweise MAC-Adressen. Darüber hinaus wird Sicherungsschicht-Verbindungen jeweils ein Verbindungsname zugeordnet. Jeweils aktualisierte Zuordnungen zwischen logischen Geräteadressen und Verbindungsnamen werden in einem Namensdienst-System registriert und durch dieses für Namensauflösungen bzw. inverse Namensauflösungen bereitgestellt. Das Namensdienst-System umfasst vorzugsweise zumindest einen Domain Name System Server.

Erfindungsgemäß sind Sicherungsschicht-Verbindungen zugeordnete Kommunikationsnetz-Ressourcen unter Angabe des jeweiligen Verbindungsnamens verwendbar, wobei der Verbindungsname in eine logische Geräteadresse aufgelöst wird. Auf diese Weise ist eine zuverlässige und durch Nutzer von Sicherungsschicht-Verbindungen bequem handhabbare Identifizierung von Sicherungsschicht-Verbindungen bzw. Verbindungen auf Layer 2 gewährleistet. Insbesondere können diese Verbindungen nun jeweils unter Angabe eines gleichbleibenden Verbindungsnamens genutzt werden.

Vorzugsweise werden die logischen Geräteadressen den Sicherungsschicht-Verbindungen durch einen Konfigurationsdienst zugeordnet. Somit ist keine nutzerseitige Konfiguration erforderlich. Die logischen Geräteadressen können den Sicherungsschicht-Verbindungen beispielsweise entsprechend Dynamic Host Configuration Protocol zugeordnet werden. Darüber hinaus kann für Echtzeit-Datenverkehr zumindest ein reservierter Adressbereich vorgesehen sein, der Sicherungsschicht-Verbindungen zuordenbare logische Geräteadressen umfasst. Dies vereinfacht eine gezielt priorisierte Diagnose bzw. Behandlung von Echtzeit-Datenverkehr.

Entsprechend einer vorteilhaften Ausgestaltung des erfindungsgemäßen Verfahrens umfassen die Verbindungsnamen für die Sicherungsschicht-Verbindungen Angaben zu Anwendungs- oder Projekteinstellungen, zu Datenverkehrsprioritäten bzw. zu zugeordneten Diensten umfassen. Darüber hinaus können die Verbindungsnamen für die Sicherungsschicht-Verbindungen Namen von Anfangs- bzw. Endpunkten der jeweiligen Sicherungsschicht-Verbindung umfassen. Dies ermöglicht eine komfortable und zuverlässige Verwaltung von Sicherungsschicht-Verbindungen. Dabei können die Sicherungsschicht-Verbindungen insbesondere Multicast-Verbindungen sein. In diesem Fall werden von einer Multicast-Verbindung umfasste Pfade vorteilhafterweise bei einer Namensauflösung automatisch reserviert bzw. eingerichtet.

Das erfindungsgemäße Kommunikationsgerät ist zur Durchführung eines Verfahrens entsprechend vorangehenden Ausführungen vorgesehen und umfasst zumindest eine Sende- und Empfangseinheit und eine Medienzugriffssteuerungseinheit. Zusätzlich ist eine Funktionseinheit zur Anforderung einer Zuordnung einer logischen Geräteadresse zu einer das Kommunikationsgerät umfassenden Sicherungsschicht-Verbindung vorgesehen. Dabei ist die Sicherungsschicht-Verbindung anhand der logischen Geräteadresse identifizierbar. Darüber hinaus umfasst das erfindungsgemäße Kommunikationsgerät eine Funktionseinheit zur Anforderung einer Zuordnung eines Verbindungsnamens für die das Kommunikationsgerät umfassende Sicherungsschicht-Verbindung. Darüber hinaus ist eine Funktionseinheit zur Anforderung einer Registrierung einer Zuordnung zwischen der logischen Geräteadresse und dem Verbindungsnamen in einem Namensdienst-System vorgesehen.

Die vorliegende Erfindung wird nachfolgend an einem Ausführungsbeispiel anhand der Zeichnung näher erläutert. Es zeigt
- Figur 1: ein Kommunikationsnetz eines industriellen Automatisierungssystems mit mehreren Switches und Kommunikationsend- bzw. Automatisierungsgeräten,
- Figur 2: eine schematische Darstellung eines Switches gemäß Figur 1.

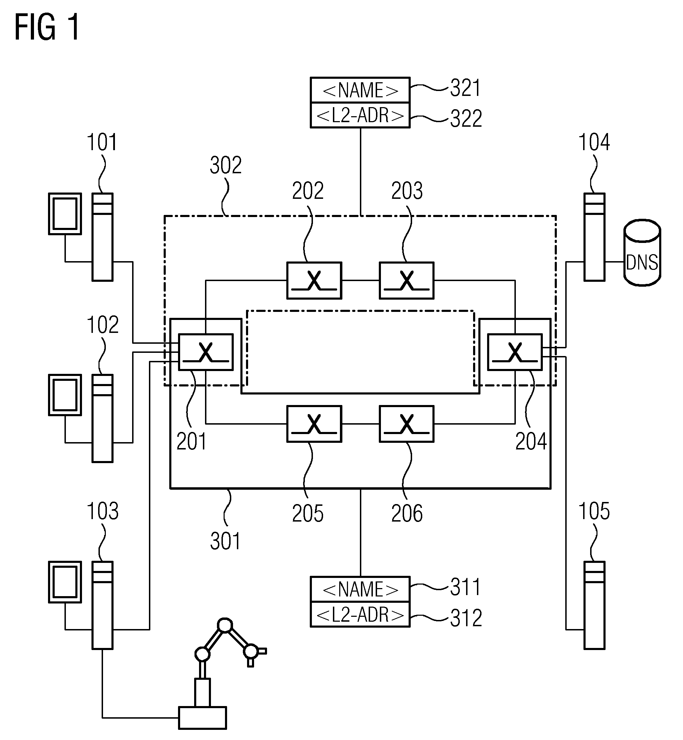

Das in Figur 1 dargestellte Kommunikationsnetz umfasst mehrere Switches 201-206, an die mehrere Kommunikationsend- bzw. Automatisierungsgeräte 101-105 angeschlossen sind. Diese Kommunikationsend- bzw. Automatisierungsgeräte 101-105 können beispielsweise Steuerungs- und Feldgeräte eines industriellen Automatisierungssystems, wie speicherprogrammierbare Steuerungen oder dezentrale Peripheriegeräte, oder Prozessleit- und Projektierungssysteme für das industrielle Automatisierungssystem sein. Insbesondere auf Steuerungs- und Feldebene des industriellen Automatisierungssystems erfolgt eine Übermittlung von Steuerungs- und Prozessdaten unter Echtzeit-Anforderungen.

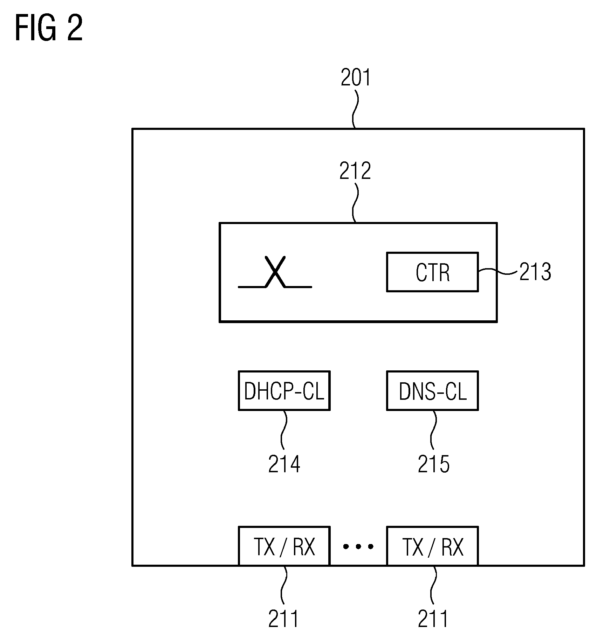

Die Switches 201-206 sind im vorliegenden Ausführungsbeispiel hinsichtlich Aufbau und Funktionalität identisch. Repräsentativ für die Switches 201-206 ist der Switch 201 in Figur 2 schematisch dargestellt. Der Switch 201 umfasst mehrere Sende- und Empfangseinheiten 211, die jeweils einen Anschluss für eine Kommunikationsverbindung innerhalb des industriellen Automatisierungssystems aufweisen. Die Sende- und Empfangseinheiten 211 sind über einen Backplane Switch 212 mit zugeordnetem Controller 213 steuerbar miteinander verbunden. Der Backplane Switch 212 stellt also eine Medienzugriffssteuerungseinheit dar. Den Sende- und Empfangseinheiten 211 sind jeweils Warteschlangen für eine Übermittlung von Steuerungsdaten innerhalb des Automatisierungssystems zugeordnet.

Außerdem umfassen die Switches 201-206 jeweils einen DHCP-Client 214 als Funktionseinheit zur Anforderung einer Zuordnung einer logischen MAC-Adresse zu einer den jeweiligen Switch 201-206 umfassenden Layer 2 Verbindung, wobei die Layer 2 Verbindung anhand der logischen MAC-Adresse identifizierbar ist. Zusätzlich weisen die Switches 201-206 jeweils einen DNS-Client 215 als Funktionseinheit zur Anforderung einer Zuordnung eines Verbindungsnamens für die den jeweiligen Switch 201-206 umfassende Layer 2 Verbindung auf. Der DNS-Client 215 ist darüber hinaus als Funktionseinheit zur Anforderung einer Registrierung einer Zuordnung zwischen der logischen Geräteadresse und dem Verbindungsnamen in einem Namensdienst-System ausgestaltet und eingerichtet. Grundsätzlich können auch die Kommunikationsend- bzw. Automatisierungsgeräte 101-105 zusätzlich zu zumindest einer Sende- und Empfangseinheit und einer Medienzugriffssteuerungseinheit einen DHCP-Client und einen DNS-Client mit vorangehen beschriebener Funktionalität umfassen.

Im vorliegenden Ausführungsbeispiel ist ein Kommunikationsend- bzw. Automatisierungsgerät 104 als DNS-Server für das Namensdienst-System vorgesehen. Zur Übermittlung von Datenrahmen innerhalb des in Figur 1 dargestellten Kommunikationsnetzes, bei dem zu übermittelnde Datenrahmen zumindest eine Quell-MAC-Adresse und eine Ziel-MAC-Adresse umfassen, wird Sicherungsschicht-Verbindungen 301, 302, über die auf Layer 2 Datenrahmen übermittelt werden, jeweils eine logische MAC-Adresse 312, 322 zugeordnet, anhand derer die Sicherungsschicht-Verbindungen 301, 302 identifizierbar sind. Zusätzlich wird den Sicherungsschicht-Verbindungen 301, 302 jeweils zusätzlich ein Verbindungsname 311, 321 zugeordnet. Die Verbindungsnamen 311, 321 können beispielsweise Angaben zu Anwendungs- oder Projekteinstellungen, zu Datenverkehrsprioritäten bzw. zu zugeordneten Diensten umfassen. Zusätzlich oder alternativ können die Verbindungsnamen 311, 321 auch Namen von Anfangs- bzw. Endpunkten der jeweiligen Sicherungsschicht-Verbindung 301, 302 umfassen.

Im DNS-Server 104 werden mittels der DNS-Clients der Switches oder der Kommunikationsend- bzw. Automatisierungsgeräte jeweils aktualisierte Zuordnungen zwischen den logischen MAC-Adressen 312, 322 der Sicherungsschicht-Verbindungen 301, 302 und den Verbindungsnamen 311, 321 registriert und für Namensauflösungen bzw. inverse Namensauflösungen bereitgestellt. Auf diese Weise sind den Sicherungsschicht-Verbindungen 301, 302 zugeordnete Kommunikationsnetz-Ressourcen unter Angabe des jeweiligen Verbindungsnamens 311, 321 verwendbar, insbesondere durch Auflösung des Verbindungsnamens 311, 321 in eine logische MAC-Adresse 312, 322 der jeweiligen Sicherungsschicht-Verbindung 301, 302. Die Sicherungsschicht-Verbindungen 301, 302 können insbesondere Multicast-Verbindungen sein, wobei einer Multicast-Verbindung umfasste Pfade im Rahmen einer Namensauflösung automatisch reserviert bzw. eingerichtet werden.

Die logischen MAC-Adressen werden den Sicherungsschicht-Verbindungen im vorliegenden Ausführungsbeispiel durch einen Konfigurationsdienst entsprechend Dynamic Host Configuration Protocol (DHCP) zugeordnet werden. Entsprechend einer besonders bevorzugten Ausgestaltung ist für Echtzeit-Datenverkehr zumindest ein reservierter Adressbereich vorgesehen, der Sicherungsschicht-Verbindungen zuordenbare logische MAC-Adressen umfasst.

## Patentansprüche

1. Verfahren zur Übermittlung von Datenrahmen innerhalb eines Kommunikationsnetzes eines industriellen Automatisierungssystems, bei dem
- zu übermittelnde Datenrahmen zumindest eine Quell-Geräteadresse und eine Ziel-Geräteadresse umfassen,
- Sicherungsschicht-Verbindungen, über die auf Sicherungsschicht Datenrahmen übermittelt werden, jeweils eine logische Geräteadresse zugeordnet wird, anhand derer die Sicherungsschicht-Verbindungen identifizierbar sind,
- Sicherungsschicht-Verbindungen jeweils zusätzlich ein Verbindungsname zugeordnet wird,
- jeweils aktualisierte Zuordnungen zwischen logischen Geräteadressen und Verbindungsnamen in einem Namensdienst-System registriert und durch dieses für Namensauflösungen und/oder inverse Namensauflösungen bereitgestellt werden,
- Sicherungsschicht-Verbindungen zugeordnete Kommunikationsnetz-Ressourcen unter Angabe des jeweiligen Verbindungsnamens verwendbar sind, wobei der Verbindungsname in eine logische Geräteadresse aufgelöst wird.

2. Verfahren nach Anspruch 1,
bei dem die logischen Geräteadressen den Sicherungsschicht-Verbindungen durch einen Konfigurationsdienst zugeordnet werden.

3. Verfahren nach Anspruch 2,
bei dem die logischen Geräteadressen den Sicherungsschicht-Verbindungen entsprechend Dynamic Host Configuration Protocol zugeordnet werden.

4. Verfahren nach einem der Ansprüche 2 oder 3,
bei dem für Echtzeit-Datenverkehr zumindest ein reservierter Adressbereich vorgesehen ist, der Sicherungsschicht-Verbindungen zuordenbare logische Geräteadressen umfasst.

5. Verfahren nach einem der Ansprüche 1 bis 4,
bei dem die Verbindungsnamen für die Sicherungsschicht-Verbindungen Angaben zu Anwendungs- oder Projekteinstellungen, zu Datenverkehrsprioritäten und/oder zu zugeordneten Diensten umfassen.

6. Verfahren nach einem der Ansprüche 1 bis 5,
bei dem die Verbindungsnamen für die Sicherungsschicht-Verbindungen Namen von Anfangs- und/oder Endpunkten der jeweiligen Sicherungsschicht-Verbindung umfassen.

7. Verfahren nach einem der Ansprüche 1 bis 6,
bei dem die Sicherungsschicht-Verbindungen Multicast-Verbindungen sind, und bei dem von einer Multicast-Verbindung umfasste Pfade bei einer Namensauflösung automatisch reserviert und/oder eingerichtet werden.

8. Verfahren nach einem der Ansprüche 1 bis 7,
bei dem die logischen Geräteadressen MAC-Adressen sind.

9. Verfahren nach einem der Ansprüche 1 bis 8,
bei dem das Namensdienst-System zumindest einen Domain Name System Server umfasst.

10. Kommunikationsgerät zur Durchführung eines Verfahrens nach einem der Ansprüche 1 bis 9 mit
- zumindest einer Sende- und Empfangseinheit,
- einer Medienzugriffssteuerungseinheit,
- einer Funktionseinheit zur Anforderung einer Zuordnung einer logischen Geräteadresse zu einer das Kommunikationsgerät umfassenden Sicherungsschicht-Verbindung, wobei die Sicherungsschicht-Verbindung anhand der logischen Geräteadresse identifizierbar ist,
- einer Funktionseinheit zur Anforderung einer Zuordnung eines Verbindungsnamens für die das Kommunikationsgerät umfassende Sicherungsschicht-Verbindung,
- einer Funktionseinheit zur Anforderung einer Registrierung einer Zuordnung zwischen der logischen Geräteadresse und dem Verbindungsnamen in einem Namensdienst-System.
